# EUROPÄISCHE PATENTANMELDUNG

(11) **EP 1 158 196 A2**
(43) Veröffentlichungstag der Anmeldung: **28.11.2001**
(21) Anmeldenummer: 01112183.7
(22) Anmeldetag: 18.05.2001
(51) Int. Cl.: F16D 65/095, F16D 55/228

(54) **Teilbelagscheibenbremse mit Bremsbelagabstützung**

(30) Priorität: 23.05.2000 DE 10025065; 20.03.2001 DE 10113347
(71) Anmelder: Continental Teves AG & Co. oHG, 60488 Frankfurt (DE)
(72) Erfinder: Bauer, Jürgen, 65187 Wiesbaden (DE); Keferstein, Hans-Georg, 64291 Darmstadt (DE); Sundheim, Ralf, 60316 Frankfurt (DE); Renner, Ewald, 63857 Waldaschaff (DE); Langer, Wolfgang, 60529 Frankfurt (DE); Ungethüm, Ulrich, 63179 Obertshausen (DE); Kircher, Andreas, 64297 Darmstadt (DE)

(57) **Zusammenfassung**

Die vorliegende Erfindung betrifft eine Teilbelagscheibenbremse, insbesondere eine Festsattelbremse, für ein Kraftfahrzeug mit einer Vorrichtung zur Abstützung und Führung der zugehörigen Bremsbeläge (4). Bisherige Anordnungen zur Führung bzw. Abstützung der Bremsbeläge (4) sind häufig unzureichend bzw. erschweren sie den Einsatz neuer geeigneter Werkstoffe für die Bremsenkomponenten.

Erfindungsgemäß umfaßt die Teilbelagscheibenbremse für ein Kraftfahrzeug demnach ein einen Rand einer Bremsscheibe umgreifendes Bremsgehäuse (1), mit zumindest einem verschiebbar im Bremsgehäuse angeordneten Bremsbelag (4), und wenigstens zwei fahrzeugfest angeordnete Abstützelemente (7, 8) zur verschiebbaren Lagerung des Bremsbelages (4) sowie zur Abstützung am Bremsbelag auftretender Bremsumfangskräfte. Dabei ist der Bremsbelag (4) an einem ersten Abstützelement (7) drehbar gelagert und liegt an einem zweiten Abstützelement (8) formschlüssig an, wobei der Bremsbelag (4) zumindest bei Bremsbetätigung an beiden Abstützelementen (7, 8) in Umfangsrichtung (15) abgestützt ist.

## Beschreibung

Die vorliegende Erfindung betrifft eine Teilbelagscheibenbremse, insbesondere eine Festsattelbremse, für ein Kraftfahrzeug mit einer Vorrichtung zur Abstützung und Führung der zugehörigen Bremsbeläge.

Aus der DE 41 15 064 C2 ist eine Festsattel-Teilbelagscheibenbremse für Kraftfahrzeuge bekannt, mit einem Festsattel an dem beiderseits einer Bremsscheibe angeordnete Bremsbeläge in Betätigungsrichtung verschiebbar abgestützt sind. Im Festsattel sind Bolzen aus einem hochfesten Material unlösbar verankert, an denen die Bremsbeläge in Betätigungsrichtung verschiebbar geführt und abgestützt sind. Die während einer Bremsbetätigung an den Bremsbelägen auftretenden Bremsumfangskräfte werden demzufolge über die Bolzen in den Festsattel eingeleitet. Es gestaltet sich bei einer derartigen Anordnung als besonders aufwendig die Bolzen im Festsattel zu verankert, vorzugsweise durch Eingießen der Bolzen.

In der DE 38 03 957 A1 wird eine Teilbelagscheibenbremse vorgeschlagen, bei der im Bremssattel Profilschienen verschraubt sind. An den Profilschienen sind wiederum die Bremsbeläge verschiebbar geführt und abgestützt. Dabei sind die Profilschienen in ihrer Position am Bremssattel einstellbar um auftretende Toleranzschwankungen ausgleichen zukönnen. Dies erfordert jedoch einen zusätzlichen Justier- bzw. Montageaufwand. Zudem werden lediglich Ausführungen der Teilbelagscheibenbremse mit gedrückt abgestützten Bremsbelägen vorgeschlagen, die ein unzureichendes komfortverhalten aufweisen.

Aus DE 195 40 757 A1 ist schließlich eine Teilbelagscheibenbremse in Festsattelbauform bekannt, bei der ein getrennter Halter zur verschiebbaren Führung sowie Abstützung der Bremsbeläge vorgesehen ist. An den Bremsbelägen auftretende Bremsumfangskräfte werden somit unmittelbar über den Halter abgeführt, der fahrzeugfest montiert ist. Der Festsattel bleibt demnach unbeeinflußt von Bremsumfangskräften. Bei dieser Konstruktion steigt durch den separaten Halter der Bauteil- sowie der Montageaufwand.

Ausgehend davon besteht die Aufgabe der Erfindung darin, eine Teilbelagscheibenbremse anzugeben, die unter Einsatz einfacher Mittel eine komfortable Führung und Abstützung der verschiebbar gelagerten Bremsbeläge ermöglicht und gleichzeitig den Einsatz unterschiedlicher Werkstoffe für die Bremsenkomponenten erlaubt.

Gelöst wird diese Aufgabe durch eine Teilbelagscheibenbremse mit den Merkmalen des Patentanspruchs 1. Danach umfaßt die Teilbelagscheibenbremse eines Kraftfahrzeuges ein einen Rand einer Bremsscheibe umgreifendes Bremsgehäuse, mit zumindest einem verschiebbar im Bremsgehäuse angeordneten Bremsbelag und wenigstens zwei fahrzeugfest angeordnete Abstützelementen zur verschiebbaren Lagerung des Bremsbelages sowie zur Abstützung am Bremsbelag auftretender Bremsumfangskräfte. Zur sowohl einfachen als auch komfortablen Gestaltung der Belagführung sowie -abstützung ist der Bremsbelag an einem ersten Abstützelement drehbar gelagert und liegt an einem zweiten Abstützelement formschlüssig an. Weiterhin stützt sich der Bremsbelag zumindest bei Bremsbetätigung an beiden Abstützelementen in Umfangsrichtung ab, um die auftretenden Bremsumfangskräfte auf beide Abstützelemente zu übertragen. Insbesondere liegt der Bremsbelag nur an den beiden Abstützelementen an, um das Bremsgehäuse nicht zusätzlich mit Bremskräften zu belasten. Damit können die Bremsumfangskräfte auf beide Abstützelemente aufgeteilt werden. Die Position der einzelnen, fahrzeugfest montierten Abstützelemente kann vorteilhaft nach den jeweiligen Bauraumvorgaben nahezu beliebig gewählt werden. Dies erlaubt eine äußerst flexible Gestaltung der Teilbelagscheibenbremse.

Eine vorteilhafte Weiterbildung der Teilbelagscheibenbremse wird dadurch erreicht, daß das zweite Abstützelement an einem bezogen auf die Hauptdrehrichtung der Bremsscheibe einlaufseitigen Abschnitt des Bremsgehäuses angeordnet ist. Am zweiten Abstützelement liegt der Bremsbelag formschlüssig an, um zunächst ein Verdrehen des Bremsbelages um eine Achse in Betätigungsrichtung zu unterbinden. Dazu ist das zweite Abstützelement insbesondere schienenartig ausgebildet mit einem geeigneten Querschnittsprofil, das eine hohe Belastbarkeit erlaubt. Ein derartiges zweites Abstützelement dient der Aufnahme des größten Teiles der auftretenden Bremsumfangskräfte. Durch die Positionierung des zweiten Abstützelementes im einlaufseitigen Bereich des Bremsgehäuses wird außerdem eine gezogene Abstützung des Bremsbelages während einer Bremsbetätigung in Hauptfahrtrichtung des Kraftfahrzeuges erreicht. Dies bietet für den Bremsenbetrieb Komfortvorteile, insbesondere hinsichtlich der Entstehung unerwünschter Bremsgeräusche. Verstärkt wird dieser positive Effekt dadurch, daß auch das erste Abstützelement an einem bezogen auf die Hauptdrehrichtung der Bremsscheibe einlaufseitigen Abschnitt des Bremsgehäuses angeordnet ist.

Ein weiterer Vorteil der erfindungsgemäßen Teilbelagscheibenbremse wird dadurch erreicht, daß der Bremsbelag am ersten Abstützelement bezogen auf die Bremsscheibenachse radial aufliegt. Dabei ist das erste Abstützelement bezogen auf die Bremsscheibenachse am radial inneren Rand des Bremsbelages angeordnet. Auf diese Weise kann der Bremsbelag einfach radial von außen in das Bremsgehäuse eingesetzt bzw. aus diesem entfernt werden. Zur Realisierung der drehbaren Lagerung des Bremsbelages am ersten Abstützelement ist dieses insbesondere konzentrisch zur Achse seiner Längserstreckung ausgebildet, beispielsweise als Bolzen. Damit wird die Verwendung einfacher Bauteile als Abstützelemente erreicht und weiterhin wird grundsätzlich die Montage des Bremsbelages bzw. der Bremsbelagwechsel erleichtert.

In Weiterentwicklung der letztgenannten Anordnung der Teilbelagscheibenbremse ist es sinnvoll, das zweite Abstützelement bezogen auf die Bremsscheibenachse am radial äußeren Rand des Bremsbelages anzuordnen. Dadurch liegt das Abstützelement radial auf dem Bremsbelag auf und kann eine Herausfallen des Bremsbelages aus dem Bremsgehäuse wirkungsvoll verhindern.

Eine bevorzugte Ausführung der Teilbelagscheibenbremse ergibt sich dadurch, daß die Abstützelemente an einem fahrzeugfesten Halter zur verschiebbaren Aufnahme zumindest eines Bremsbelages sowie zur verschiebbaren Lagerung eines Bremsgehäuses befestigt sind. Eine derartige Anordnung läßt sich bei allen Schwimmsattel-Bauformen einer Teilbelagscheibenbremse umsetzen. Durch die Befestigung der Abstützelemente am separaten Halter werden die Bremsumfangskräfte unmittelbar vom Halter aufgenommen. Das Bremsgehäuse bleibt frei von Belastungen in Umfangsrichtung.

Gemäß einer anderen vorteilhaften Variante der Teilbelagscheibenbremse ist das Bremsgehäuse als Festsattel ausgebildet, an dem die Abstützelemente befestigt sind. Dabei werden die Bremsumfangskräfte vom Festsattel aufgenommen.

Vorzugsweise ist vorgesehen, daß zumindest eines der Abstützelemente den Rand der Bremsscheibe axial übergreift und beiderseits der Bremsscheibe am Halter bzw. Bremsgehäuse befestigt ist. Damit wird eine einteiliges Abstützelement geschaffen, daß an beiden Enden eingespannt ist und demzufolge quer zur Längserstreckung stark belastbar ist. Dies erlaubt sogar eine Ausführung der Teilbelagscheibenbremse mit einem zweiten Abstützelement, an dem beiderseits der Bremsscheibe angeordnete Bremsbeläge abgestützt sind. Damit wird ein einzelnes Abstützelement zur Aufnahme der Bremsumfangskräfte mehrerer Bremsbeläge genutzt. Selbstverständlich ist es ebenso denkbar für jeden Bremsbelag ein eigenes zweites Abstützelement vorzusehen, das jeweils die Bremsumfangskräfte nur eines einzigen Bremsbelages aufnimmt.

Eine vorteilhafte Weiterbildung der Teilbelagscheibenbremse wird dadurch realisiert, daß das zweite Abstützelement lösbar am Halter bzw. Bremsgehäuse befestigt ist. Damit wird eine montagefreundliche Ausführung der Teilbelagscheibenbremse erreicht, die einen einfachen Wechsel des Bremsbelages ermöglicht.

Eine vorteilhafte Ausführung einer erfindungsgemäßen Teilbelagscheibenbremse wird anhand der Figuren dargestellt und im folgenden näher erläutert.

Es zeigt:
- Fig.1: eine als Festsattelbremse ausgeführte Teilbelagscheibenbremse mit erfindungsgemäßer Abstützung der Bremsbeläge mit zwei Abstützelementen in räumlicher Ansicht;
- Fig.2: die Festsattelbremse aus Figur 1 in geschnittener räumlicher Ansicht;
- Fig.3: eine weitere Darstellung der Festsattelbremse aus Figur 1 in geschnittener Seitenansicht.

Den Figuren ist eine Teilbelagscheibenbremse in Festsattel-Bauweise zu entnehmen. Sie umfaßt ein als Festsattel 1 ausgebildetes Bremsgehäuse 1, das den Rand einer Bremsscheibe 2 axial übergreift. Der Festsattel 1 kann dabei sowohl einteilig als auch mehrteilig ausgeführt sein. In den Figuren ist ein symmetrisch geteilter Festsattel 1 gezeigt mit zwei Gehäusehälften 6 Zu jeder Seite der Bremsscheibe 2 ist im Festsattel 1 jeweils zumindest eine Betätigungseinheit 3 angeordnet, zur Beaufschlagung zugehöriger Bremsbeläge 4 mit einer Bremsbetätigungskraft. Innerhalb eines radial offenen Schachtes 5 sind im Festsattel 1 Bremsbeläge 4 aufgenommen, im Ausführungsbeispiel nach den Figuren zu jeder Seite der Bremsscheibe 2 jeweils ein Bremsbelag 4. Die Bremsbeläge 4 sind jeweils in Betätigungsrichtung, d. h. parallel zur Bremsscheibenachse, verschiebbar im Schacht 5 des Festsattels 1 angeordnet.

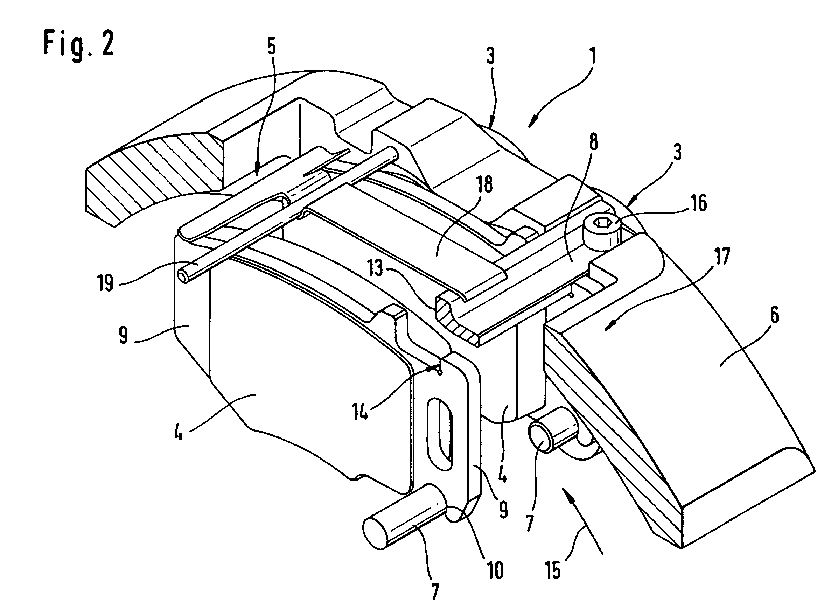

Zur verschiebbaren Führung und Abstützung der Bremsbeläge 4 im Festsattel sind je Bremsbelag zwei Abstützelemente 7, 8 am Festsattel 1 befestigt. Ein erstes Abstützelement 7 ist vorzugsweise als konzentrischer Bolzen 7 ausgeführt und im bereich des radial innenliegenden Randes des Bremsbelages 4 im Festsattel 1 befestigt. Dieses erste, bolzenartige Abstützelement 7 dient der radialen Auflage des Bremsbelages 4 und verhindert damit ein radiales Durchrutschen des Bremsbelages 4 nach innen. Im Bremsbelag 4 ist vorzugsweise in der Trägerplatte 9 eine zugehörige nach außen offen Ausnehmung 10 ausgebildet, so daß der Bremsbelag 4 drehbar sowie axial verschiebbar am Bolzen 7 gelagert ist. Der Bolzen 7 ist insbesondere als separates Bauteil lösbar am Festsattel 1 befestigt, beispielsweise durch Verschrauben. Dies eröffnet die Möglichkeit eines Bolzenwechsels bei Bedarf. Selbstverständlich kann der Bolzen 7 auch unlösbar am Festsattel 1 verankert sein, z. B. durch Kleben, Löten, Umformbearbeitung, Schweißen etc.. Die Verwendung eines separaten Bolzens 7 gestattet es, eine gezielte Werkstoffauswahl für den Bolzen 7 vorzunehmen und insbesondere einen anderen, z. B. hochfesten, Werkstoff zu wählen als für den Festsattel 1. Wie speziell Figur 2 zu entnehmen ist, ist für jede Bremsscheibenseite, sprich für jeden Bremsbelag 4, ein eigener Bolzen 7 vorgesehen. Bei Positionierung des Bolzens 7 an anderer Stelle im Festsattel 1, insbesondere außerhalb des Bremsscheibendurchmessers ist es ebenso möglich einen nicht gezeigten einteiligen Bolzen für beide Bremsbeläge 4 zu verwenden, der entsprechend die Bremsscheibe 2 axial überragen würde. Darüber hinaus ist es ebenfalls möglich den Bolzen 7 einstückig an den Festsattel 1 anzuformen, beispielsweise unmittelbar während des Gießens.

Zusätzlich zum ersten bolzenartigen Abstützelement 7 ist ein zweites Abstützelement 8 zur komfortablen Führung sowie Abstützung der Bremsbeläge 4 vorgesehen. Das zweite Abstützelement 8 ist als Schiene 8 mit insbesondere profiliertem Querschnitt ausgebildet und dient der Aufnahme des wesentlichen Anteiles der an den Bremsbelägen 4 auftretenden Bremsumfangskräfte. Das schienenartige zweite Abstützelement 8 ist einteilig ausgeführt und überragt den radial äußeren Rand der Bremsscheibe 2. Es dient somit zur Führung sowie Abstützung beider Bremsbeläge 4. Selbstverständlich ist es alternativ dazu denkbar, das zweite Abstützelement 8 zweiteilig auszuführen und für jeden Bremsbelag 4 eine eigenes zweites Abstützelement 8 vorzusehen. Das schienenförmige zweite Abstützelement 8 ist vorzugsweise lösbar in entsprechenden Aussparungen 11 des Festsattels 1 befestigt. Dabei sind die beiderseits der Bremsscheibe 2 ausgebildeten Aussparungen 11 am Festsattel 1 an die Querschnittsform des zweiten Abstützelementes 8 angepaßt. Insbesondere sind zumindest bezogen auf eine Drehrichtung der Bremsscheibe 2 große Anlageflächen 12 innerhalb der Aussparungen 11 vorgesehen, um die Bremsumfangskräfte bei möglichst kleiner Flächenpressung zu übertragen. Dazu weist das schienenförmige zweite Abstützelement 8 eine zugehörige Abstützfläche 13 auf, die mit der Anlagefläche 12 zumindest bei Bremsbetätigung zusammenwirkt.

Am Bremsbelag 4 ist jeweils eine entsprechende kerbenartige Vertiefung 14 angeformt, über die der Bremsbelag 4 formschlüssig am zweiten Abstützelement 8 verschiebbar gelagert ist. Über diese Vertiefungen 14 wird auch der wesentliche Anteil der Bremsumfangskräfte auf das zweite Abstützelement übertragen. Durch die beiden Abstützelemente 7, 8 wird demnach jeder der Bremsbeläge 4 positionsgenau im Festsattel fixiert.

Die Befestigung des zweiten Abstützelementes 8 am Festsattel 1 erfolgt bevorzugt lösbar. Dazu können beispielsweise Befestigungsschrauben 16 vorgesehen sein, mittels derer das schienenförmige Abstützelement 8 innerhalb der Aussparungen 11 am Festsattel verschraubt ist. Selbstverständlich sind auch andere lösbare Befestigungsmöglichkeiten denkbar, z. B. Verrasten, Verklemmen etc.. Es bietet sich an das zweite Abstützelement 8 am radial außenliegenden Rand der Bremsbeläge 4 anzuordnen, um einerseits die Bremsbeläge 4 gegen radiales Herausfallen aus dem Festsattel 1 zu sichern und andererseits eine unproblematische radiale Montage/Demontage der Bremsbeläge 4 zu gewährleisten.

Die beiden Abstützelemente 7, 8 sind vorzugsweise in einem bezogen auf die Hauptdrehrichtung 15 der Bremsscheibe 2, d. h. bei Vorwärtsfahrt des Kraftfahrzeuges, einlaufseitigen Abschnitt 17 des Festsattels 1 angeordnet. Damit läßt sich eine besonders komfortable Abstützung der an den Bremsbelägen 4 anliegenden Bremsumfangskräfte erreichen. Während einer Bremsbetätigung stützen sich die Bremsbeläge 4 in Hauptdrehrichtung über die Ausnehmung 10 bzw. die nutartige Vertiefung 14 an den beiden Abstützelementen 7, 8 ab, wobei der wesentliche Teil der Bremsumfangskraft vom schienenförmigen zweiten Abstützelement 8 aufgenommen wird. Dennoch sind beide Abstützelemente 7, 8 an der Umfangskraftübertragung beteiligt. Dadurch werden die Bremsbeläge 4 infolge der Bremsumfangskraft vorteilhaft gezogen an den beiden Abstützelementen 7, 8 abgestützt. Eine solche gezogen Bremsbelagabstützung erweist sich als besonders unempfindlich bezüglich der Entstehung unerwünschter Bremsgeräusche. Ferner ist es vorteilhaft die Bremsbeläge 4 ausschließlich über die Abstützelemente 7, 8 im Festsattel zu führen und abzustützen und keine weiter Kontaktstelle zwischen Bremsbelägen 4 und Festsattel 1 vorzusehen.

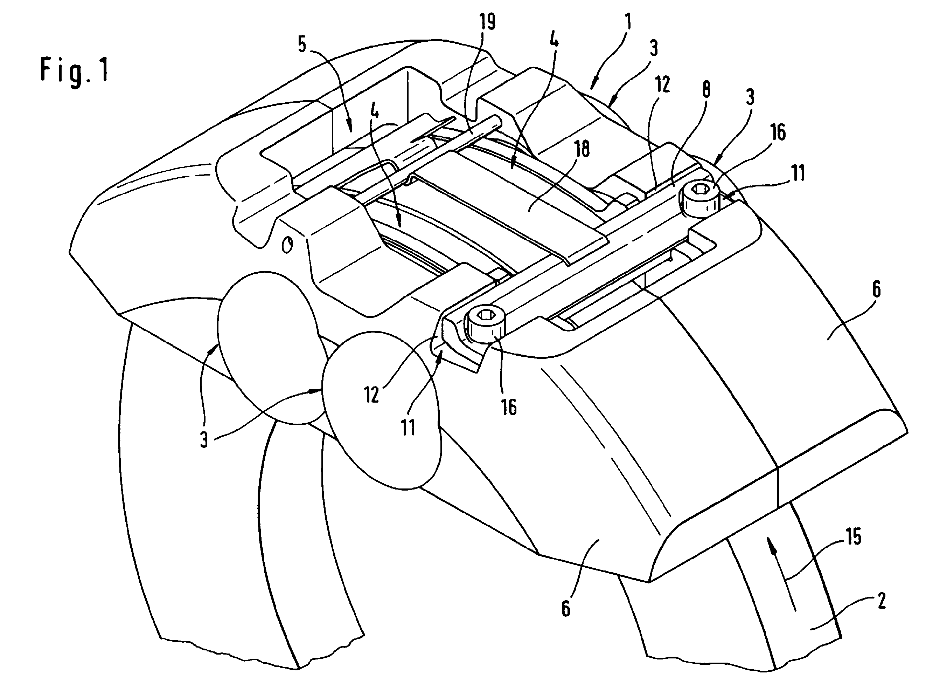

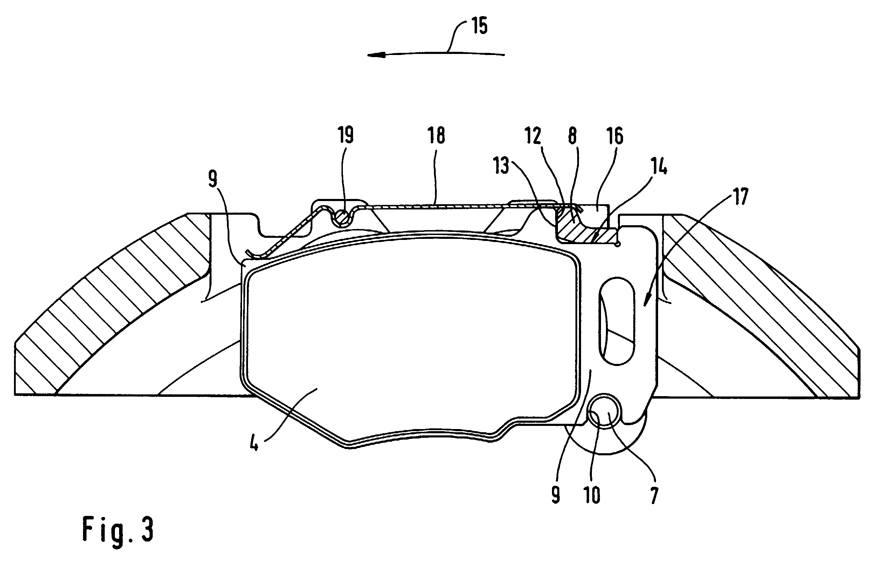

Dabei ist die Querschnittsform des zweiten Abstützelementes 8 an die hohen Belastungen angepaßt. In der Ausführung nach den Figuren 1-3 weist das zweite Abstützelement 8 ein L-förmiges Querschnittsprofil auf. An einem Schenkel des L-Profiles ist die große Abstützfläche 13 ausgebildet, über die die Bremsumfangskräfte in den Festsattel 1 eingeleitet werden. Dabei ist es sinnvoll die Kontaktzone zwischen Abstützfläche 13 am zweiten Abstützelement 8 und Anlagefläche 12 am Festsattel 1 möglichst groß zu gestalten, um dort eine geringe Flächenpressung zu erreichen. Selbstverständlich sind analog zu den Figuren auch andere geeignete Querschnittsprofile für das zweite Abstützelement 8 denkbar, die eine ähnlich kleine Flächenpressung zwischen Abstützelement 8 und Festsattel 1 sicherstellen. Beispielsweise kann das Querschnittsprofil auch rechteckig, T-förmig, U-förmig oder vergleichbar derart ausgebildet sein, daß das Querschnittsprofil bezogen auf die Hauptdrehrichtung 15 ein großes Flächenmoment aufweist.

Zur spielfreien sowie klapperfreien Anordnung der Bremsbeläge 4 im Festsattel 1 ist ein Federelement 18 vorgesehen, das die Bremsbeläge 4 gegenüber den Abstützelementen 7, 8 vorspannt. Dazu ist das Federelement 18 mittels eines Haltestiftes 19 im Festsattel 1 fixiert.

Grundsätzlich lassen sich die Abstützelemente 7, 8 auch an anderer geeigneter Stelle im Festsattel 1 befestigen. Dies geht jedoch möglicherweise auf Kosten der komfortablen gezogenen Bremsbelagabstützung.

Die Abstützelemente 7, 8 werden zur Steigerung ihrer Belastbarkeit vorzugsweise auch hochfestem Material gefertigt, beispielsweise Stahl, Keramik, Composite-Werkstoff etc.. Dabei kann es sich durchaus anbieten, zwei bolzenartige Abstützelemente zu verwenden. Derartig hochfeste Abstützelemente 7, 8 lassen sich besonders sinnvoll mit Bremsgehäusen bzw. Festsätteln 1 aus Leichtwerkstoffen, z. B. Leichtmetallen, Composite-Werkstoffen etc., kombinieren.

In Ergänzung zur gezeigten Ausführung können die Abstützelemente 7, 8 analog auch an separaten Haltern oder sonstigen Bauteilen befestigt sein, die der Aufnahme Bremsumfangskräfte dienen. Derartige Halter kommen häufig in Verbindung mit Schwimmsattel-Teilbelagscheibenbremsen zum Einsatz.

## Patentansprüche

1. Teilbelagscheibenbremse eines Kraftfahrzeuges mit einem einen Rand einer Bremsscheibe umgreifenden Bremsgehäuse (1), mit zumindest einem verschiebbar im Bremsgehäuse angeordneten Bremsbelag (4), mit wenigstens zwei fahrzeugfest angeordneten Abstützelementen (7, 8) zur verschiebbaren Lagerung des Bremsbelages (4) sowie zur Abstützung am Bremsbelag auftretender Bremsumfangskräfte, **dadurch gekennzeichnet, daß** der Bremsbelag (4) an einem ersten Abstützelement (7) drehbar gelagert ist und daß der Bremsbelag (4) an einem zweiten Abstützelement (8) formschlüssig anliegt, wobei der Bremsbelag (4) zumindest bei Bremsbetätigung an beiden Abstützelementen (7, 8) in Umfangsrichtung (15) abgestützt ist.

2. Teilbelagscheibenbremse nach Anspruch 1, **dadurch gekennzeichnet, daß** das zweite Abstützelement (8) an einem bezogen auf die Hauptdrehrichtung (15) der Bremsscheibe (2) einlaufseitigen Abschnitt (17) des Bremsgehäuses (1) angeordnet ist.

3. Teilbelagscheibenbremse nach einem der vorhergehenden Ansprüche, **dadurch gekennzeichnet, daß** das erste Abstützelement (7) an einem bezogen auf die Hauptdrehrichtung (15) der Bremsscheibe (2) einlaufseitigen Abschnitt (17) des Bremsgehäuses (4) angeordnet ist.

4. Teilbelagscheibenbremse nach einem der vorhergehenden Ansprüche, **dadurch gekennzeichnet, daß** der Bremsbelag (4) am ersten Abstützelement (7) radial aufliegt.

5. Teilbelagscheibenbremse nach einem der vorhergehenden Ansprüche, **dadurch gekennzeichnet, daß** das erste Abstützelement (7) bezogen auf die Bremsscheibenachse am radial inneren Rand des Bremsbelages (4) angeordnet ist.

6. Teilbelagscheibenbremse nach einem der vorhergehenden Ansprüche, **dadurch gekennzeichnet, daß** das zweite Abstützelement (8) bezogen auf die Bremsscheibenachse am radial äußeren Rand des Bremsbelages (4) angeordnet ist.

7. Teilbelagscheibenbremse nach einem der vorhergehenden Ansprüche, **dadurch gekennzeichnet, daß** die Abstützelemente (7, 8) an einem fahrzeugfesten Halter zur verschiebbaren Aufnahme zumindest eines Bremsbelages (4) sowie zur verschiebbaren Lagerung eines Bremsgehäuses befestigt sind.

8. Teilbelagscheibenbremse nach einem der Ansprüche 1-6, **dadurch gekennzeichnet, daß** das Bremsgehäuse als Festsattel (1) ausgebildet ist, an dem die Abstützelemente (7, 8) befestigt sind.

9. Teilbelagscheibenbremse nach einem der Ansprüche 7-8, **dadurch gekennzeichnet, daß** zumindest eines der Abstützelemente (7, 8) den Rand der Bremsscheibe (2) axial übergreift und beiderseits der Bremsscheibe (2) am Halter bzw. Bremsgehäuse (1) befestigt ist.

10. Teilbelagscheibenbremse nach einem der Ansprüche 7-9, **dadurch gekennzeichnet, daß** das zweite Abstützelement (8) lösbar am Halter bzw. Bremsgehäuse (1) befestigt ist.

11. Teilbelagscheibenbremse nach Anspruch 10, **dadurch gekennzeichnet, daß** am zweiten Abstützelement (8) beiderseits der Bremsscheibe angeordnete Bremsbeläge (4) abgestützt sind.
